# EUROPÄISCHE PATENTSCHRIFT

(11) **EP 2 151 371 B1**
(45) Veröffentlichungstag und Bekanntmachung des Hinweises auf die Patenterteilung: **20.03.2013**
(21) Anmeldenummer: 09008031.8
(22) Anmeldetag: 19.06.2009
(51) Int. Cl.: B62D 33/02

(54) **Fahrzeugaufbau für Nutzfahrzeuge mit höhenverstellbaren Eckrungen**
Deck for commercial vehicles exhibiting height adjustable stanchions
Plateforme pour véhicules utilitaires équipée de ranchers réglables en hauteur

(30) Priorität: 31.07.2008 DE 102008035767
(43) Veröffentlichungstag der Anmeldung: 10.02.2010
(73) Patentinhaber: Fahrzeugwerk Bernard Krone GmbH, 48480 Spelle (DE)
(72) Erfinder: Irion, Manfred, 49757 Werlte (DE); Menke, Ansgar, 49757 Werlte (DE)
(74) Vertreter: Busse & Busse

(56) Entgegenhaltungen:
- DE-U1-202004 014 744
- DE-U1-202007 013 212

## Beschreibung

Die Erfindung bezieht sich auf ein Fahrzeugaufbau für Nutzfahrzeuge mit einer Stirnwand und einer vorzugsweise Flügeltüren umfassenden Rückwand sowie mit sich zwischen der Stirnwand und der Rückwand erstreckenden Seitenwandplanen, die an ihrer vorderen und/oder hinteren Seitenwandkante an einer eine Spannrolle umfassenden Spannstange festgelegt sind, und an einem an Längsträgern und Querträgern festlegbaren Hubdach, welche auf höhenverstellbaren vorderen und hinteren Eckrungen abgestützt sind, die über Kraftheber in unterschiedliche Höhenpositionen überführbar sind.

Fahrzeugaufbauten der vorgenannten Art für unterschiedliche Be- und Entladezwecke mit Hubdächern, sind insbesondere für Sattelauflieger mit Planenaufbauten und Schiebedächern bekannt.

Solche Hubdächer sind insbesondere deshalb von Interesse, da in Europa mit Ausnahme einiger Länder in Süd- und Osteuropa Fahrzeuge nur mit einer maximalen Aufbauhöhe von 4.000 mm im Straßenverkehr bewegt werden dürfen. In einigen süd- und osteuropäischen Ländern sind jedoch auch Aufbauhöhen von mehr als 4 Metern zugelassen. In diesen Ausnahmeländern können Aufbauten auch in einer Höhe oberhalb von 4.000 mm, d.h. in einem angehobenen Zustand, mit einem Mehr an Laderaum gefahren werden. Um einen Fahrzeugaufbau in einen angehobenen Zustand zu überführen, sind bei bekannten Lösungen aufwändige Hebemittel und Verriegelungselemente vorzusehen. Darüber hinaus ist ein hoher Justieraufwand zu betreiben.

Es ist darüber hinaus bekannt, Seitenwandplanen an Spannstangen festzulegen, um die Seitenwandplanen nach z.B. einem geöffneten Zustand in einen gespannten, geschlossenen Zustand zu überführen. Soll jedoch ein Fahrzeugaufbau mit einem Hubdach zur Verfügung gestellt werden, bereitet es vielfach Probleme, die Seitenwandplanenhöhe auf das gewünschte Höhenmaß einzustellen und sicher zu arretieren und zu spannen.

Aus dem DE 20 2004 014 744 U1 ist eine Vorrichtung zum Anheben und Absenken eines über Rungen abgestützten Daches eines Nutzfahrzeugaufbaus mit einer im oberen Rungenbereich angeordneten Führung bekannt, in der ein Hubglied mit Dachanbindung auf- und ab zu bewegen ist. Dieses Hubglied in Form eines teleskopierbaren Laufwagens mit Laufrollen ist in dieser Führung angeordnet. Eine Seitenwandplane eines Fahrzeugaufbaus ist jedoch bei dieser Vorrichtung nicht anzubinden, so dass hier ebenfalls das Problem besteht, eine Seitenwandplane auf ein gewünschtes Höhenmaß einzustellen und zu spannen.

Aus der DE 20 2007 013 212 U1 ist eine Klapprunge für den Aufbau eines Transportfahrzeuges bekannt mit einem Rungenkörper, der an seinem oberen Ende mit einem Laufwagen verbunden ist. Durch ihren unteren Bereich hat die Klapprunge einen Rungenfuß, der mit dem Rungenkörper gelenkig verbunden ist. Der Fußträger ist mittels einer mit einem Betätigungshebel verstellbaren Riegeleinrichtung lösbar gegen den Rungenkörper verriegelbar, um den Rungenfuß mit einem an einer unteren Kante des Aufbaus angeordneten oder ausgebildeten Rungenschuh zu verbinden, wobei bei gelöster Riegeleinrichtung die Klapprunge um das Klappgelenk klappbar ist. Damit sind hier auch keine Möglichkeiten vorgesehen, eine Seitenwandplane anzubinden.

Es ist Aufgabe der vorliegenden Erfindung, einen Fahrzeugaufbau der eingangs genannten Art zu schaffen, bei dem mit einem geringen Bedien- und Bauaufwand eine angehobene Position des Hubdaches mit einer Seitenwandplane eingestellt werden kann, die sich über die gesamte Höhe des Fahrzeugaufbaus erstreckt und zu spannen ist.

Zur Lösung dieser Aufgabe zeichnet sich der Fahrzeugaufbau der eingangs genannten Art durch die im Patentanspruch 1 angegebenen Merkmale aus. Hinsichtlich wesentlicher weiterer Ausgestaltungen der Erfindung wird auf die Patentansprüche 2 bis 24 verwiesen.

Durch die Erfindung ist ein Fahrzeugaufbau geschaffen, bei dem jede Spannstange nach außen hin nur einen Schlitz aufzuweisen hat sowohl zur Einführung der Plane als auch zur Zugänglichkeit eines Riegels zur Arretierung der Spannstange in unterschiedlichen Höhenpositionen. Damit lässt sich eine einstellbare Höhe exakt vorwählen und verdrehgesichert arretieren. Gleichwohl ist die Spannstange derart ausgebildet, dass sie in ihrem Inneren mit ihrer Spannrolle vor Verschmutzungen und vor dem Eindringen von Spritzwasser weitestgehend geschützt ist.

Die Spannstangen sind längenveränderlich ausgebildet, um der Höhenverstellung des Hubdaches folgen zu können. Die seitlichen Planen sind dazu zweckmäßigerweise derart im Innenbereich in eine Falte gelegt, dass sie der Höhenverstellung folgen können. Gleichwohl ist die Seitenwandplane in allen Höhenpositionen sicher zu spannen.

Die Spannrolle ist in unterschiedlichen Positionen an dem Spannstangenrohr mittels des Riegels festzulegen und kann mithin relativ zu dem Spannrohr bewegt werden. Innerhalb der Spannrolle ist eine Schlitzführung zur Aufnahme eines Keders der flexiblen Seitenwand vorgesehen, so dass aus dem Spannstangenrohr die flexible Seitenwandung ebenfalls über die Schlitzführung herausgeführt ist, so dass alle anderen Teile verdeckt angeordnet sind. Das Spannstangenrohr hat zweckmäßigerweise einen klappbaren Hebel mit einem Verriegelungselement, das von innen in entsprechende Bohrungen in dem Spannstangenrohr eingreifen kann. Damit sind exakt die entsprechenden Höhenmaße einzustellen und zu arretieren. Unterenends hat die Spannrolle bevorzugtermaßen ein Kopfstück, das als Vierkant ausgebildet ist, das in eine entsprechende Vierkantaufnahme des Fahrzeugaufbaus einführbar ist.

Um eine Höhenverstellung durchführen zu können, ist die Spannstange aus der Vierkantaufnahme herauszuheben, wozu zweckmäßigerweise wiederum eine Handschlaufe vorzusehen ist. Zur Verstellung der Spannrolle ist zweckmäßigerweise dort ebenfalls eine Handschlaufe vorzusehen. Ansonsten ist auch nur der Hebel von außen zu bedienen, so dass in bedienerfreundlicher Weise eine Verstellung der Spannstange vorzunehmen ist, ansonsten jedoch alle Teile wiederum außerordentlich spritzgesichert vorzusehen sind. Die Seitenwandung übergreift im montierten Zustand zweckmäßigerweise die Eckrunge, so dass diese zollsicher ausgebildet ist.

In vorteilhafter Weiterbildung sieht die Erfindung vor, dass in außerordentlich bedienfreundlicher Weise bei einer Höhenverstellung lediglich zunächst die Kraftheber z.B. per Knopfdruck bei einer entsprechenden Entriegelung von z.B. Türen, Freigabe von Seitenwandungen durch die erfindungsgemäß gestalteten Spannstangen usw. zu aktivieren sind, wonach sie automatisch die maximale Höhenposition anfahren, so dass sich die Eckrungen bzw. entsprechende Schubstücke von Eckrungen in ihrer maximal ausgefahrenen Position befinden.

Damit ist ein Fahrzeugaufbau geschaffen, bei dem in bedienerfreundlicher Weise bei einer Höhenverstellung lediglich zunächst die Kraftheber z.B. per Knopfdruck nach einer entsprechenden Entriegelung von z.B. Türen, Freigabe von Seitenwandungen usw. zu aktivieren sind, wonach sie automatisch die maximale Höhenposition anfahren, so dass sich die Eckrungen bzw. entsprechende Schubstücke von Eckrungen in ihrer maximal ausgefahrenen Position befinden. Danach kann in Eckrungen das entsprechende Widerlager in eine Position gebracht werden, die dem einzustellenden Höhenmaß entspricht. Nach Deaktivierung, z.B. Drucklosschalten eines als Hydraulikzylinder ausgebildeten Krafthebers, senkt sich nun das Hubdach automatisch ohne eine irgendwie gearteten zusätzlichen Steuerungs- oder Justieraufwand infolge Schwerkraft ab und gelangt in eine abgesenkte Position, an der sich z.B. Schubstücke von Eckrungen, an denen das Hubdach befestigt ist, an dem jeweiligen Widerlager abstützen. Damit ist automatisch die exakt eingestellte Höhenposition eingenommen. Die Bedienperson braucht nur noch die für eine Verriegelung insgesamt notwendigen Schritte zu vollziehen, z.B. Schließen von Seitenwänden, Verriegeln von Türen und dergleichen, wonach ein gewünschtes anderes Transport- bzw. Aufbauhöhenmaß eingestellt ist. Dies ist außerordentlich schnell zu vollziehen und kann mit einem geringstmöglichen Risiko hinsichtlich einer Fehleinstellung durchgeführt werden.

Vorzugsweise sind die Kraftheber als Hydraulikzylinder ausgebildet, wobei die beiden den beiden seitlichen vorderen Eckrungen zugeordneten Hydraulikzylinder synchron geschaltet sind. Ebenso sind die Zylinder für die hinteren Eckrungen synchron geschaltet, so dass von einer Hydraulikpumpe lediglich ein Zylinder mit dem Druckmedium zu versorgen ist, und von diesem ersten Hydraulikzylinder das Druckmedium zu dem benachbarten Hydraulikzylinder gelangt, so dass synchron und ohne das Risiko eines Verkantens das Hubdach gleichmäßig vorne, aber auch gleichmäßig hinten durch die Kraftheber anzuheben ist. Eckrungen haben zweckmäßigerweise ein höhenbewegliches und höhenmäßig arretierbares Schubstück, an das der Kraftheber angreifen kann. Dabei muss z.B. eine Schubstange eines Krafthebers nicht fest mit dem Schubstück verbunden sein. Vielmehr kann er von unten gegen ein entsprechendes Schubstück verfahren werden, wonach er dieses kontaktiert und es z.B. in die maximale Höhenposition verfährt. Danach kann er auch relativ zu dem Schubstück zurück in seine Ausgangslage nach entsprechendem Drucklosschalten der Krafthebel verfahren werden, da das Hubdach und mithin auch das Schubstück infolge der Schwerkraft und mithin selbsttätig zu dem jeweiligen Widerlager nach unten verfährt.

In einer Eckrunge ist zweckmäßigerweise ein Schlüsselloch bzw. Schlüsselelement vorgesehen, mit dem ein bevorzugtermaßen als Schiebeelement ausgebildeter Schlüssel zusammenwirkt, der relativ beweglich zu dem Schlüsselelement ausgeführt ist. Das Schlüsselelement ist im Inneren der Eckrunge angeordnet. Oberhalb des Schlüssels ist das Schubstück angeordnet, wiederum im Inneren der Eckrunge. Somit sind diese Teile verdeckt in der Eckrunge angeordnet, so dass nur noch entsprechende Betätigungselemente des Schlüssels von außen her zugänglich sind. Der Schlüssel als Schiebeelement hat vorzugsweise Nuten, die in Schlitzen des Schlüsselelementes geführt sind und entsprechende Anformungen, die zwecks Arretierung in die entsprechenden Schlüssellöcher des Schlüsselelementes hineingreifen können. Durch eine entsprechende Bedienung, z.B. einer Schlaufe kann der Schlüssel aus dem Schlüsselloch wieder herausgezogen werden und in eine entsprechende andere Position bewegt werden, um dort ein anderes Höhenmaß für eine Widerlagerposition für das Schubstück und damit das Hubdach einzunehmen. Dies vollzieht sich jedoch alles innerhalb der Eckrunge, so dass eine auch spritzwassergeschützte sichere innere Lage beibehalten werden kann. Um auch bei einer erhöhten Transportaufbauhöhe die Anordnung von außen her verdeckt zu halten, kann an dem Schubstück auch ein mit Abstand zu diesem angeordnetes Schutzblech vorgesehen sein, das in der Niedrigposition des Schubstücks Aufbauteile übergreift, jedoch bei herausgefahrenem Schubstück bei erhöhtem Aufbaumaß das herausgefahrene Schubstück nach außen hin verdeckt.

Um eine Höhenverstellung durchführen zu können, ist die Spannstange aus der Vierkantaufnahme herauszuheben, wozu zweckmäßigerweise wiederum eine Handschlaufe vorzusehen ist. Zur Verstellung der Spannrolle ist auch zweckmäßigerweise dort eine Handschlaufe vorzusehen. Ansonsten ist auch nur der Hebel von außen her zu bedienen, so dass in bedienerfreundlicher Weise eine Verstellung der Spannstange vorzunehmen ist, ansonsten jedoch alle Teile wiederum außerordentlich spritzgesichert vorgesehen sind. Die Seitenwandung übergreift im montierten Zustand der Teil die Eckrunge, so dass die zollsicher ausgebildet ist.

Um bei unterschiedlichen Höhenlagen die Fahrzeugtür, die ein unverändertes Höhenmaß aufweist, verriegeln zu können, gleichfalls jedoch auch bei einem erhöhten Aufbaumaß eine möglichst der Aufbauhöhe entsprechende Türöffnung vorgesehen zu haben, sieht des Weiteren eine Weiterbildung der Erfindung vor, dass die Rückwand einen diese nach oben hin abschließenden klappbaren, einen Türanschlag und eine Türverriegelung in unterschiedlichen Höhenpositionen der Eckrunge ausbildenden winkelförmigen Portalbalken aufweist.

Der Türflügel hat dabei ein Türsicherungselement, das als verschwenkbarer Riegelfinger ausgebildet ist. Der winkelförmige Profilkörper hat seinerseits Verriegelungsaufnahmen, und zwar in unterschiedlichen Höhenlagern übereinander, die zum einen eine Aufnahme in einer Außenwandung des Portalbalkens aufweist, und zum anderen zum Inneren hin ein hinter dieser Außenwandung in einem kastenförmigen Innenraum angeordnetes Haltestangenelement, das von dem Riegelfinger zu hintergreifen ist. Zum Fahrzeugbauinneren hin ist das Kasteninnere durch eine Wandung abgedeckt, so dass der Portalbalken auch bei einer erhöhten Aufbauhöhe den Fahrzeugaufbau nach außen hin sicher abschließt, so dass auch durch die Aufnahmen in unterschiedlichen Höhenlagen zum Einführen des Riegelfingers des Türverriegelungselementes nicht die Gefahr besteht, dass Feuchtigkeit oder Spritzwasser in das Aufbauinnere gelangt.

Hinsichtlich wesentlicher weiterer Ausgestaltungen der Erfindung wird auf weitere Unteransprüche, die nachfolgende Beschreibung und die Zeichnung verwiesen. In der Zeichnung zeigen:
- Fig. 1: ein Ausführungsbeispiel von Krafthebern für die Eckrungen, die als hydraulische Kraftheber ausgebildet sind,
- Fig. 2: in schematischer Ansicht eine Vorderansicht einer Doppelflügeltür einer Rückwand mit seitlichen Eckrungen,
- Fig. 3: eine Draufsicht auf das Ausführungsbeispiel nach Fig. 2,
- Fig. 4: eine Vorderansicht einer Eckrunge mit zugeordneter Spannstange,

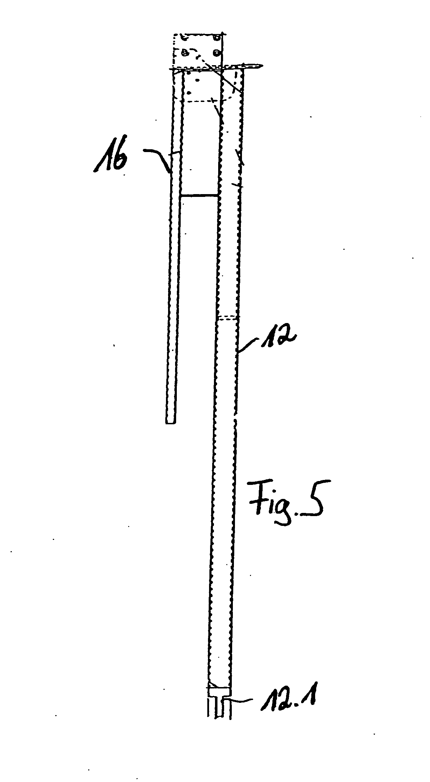

- Fig. 5: ein Ausführungsbeispiel eines Schubstücks einer Eckrunge mit daran befestigtem Schutzblech,
- Fig. 6: ein Ausführungsbeispiel eines Schlüsselelementes einer Eckrunge,

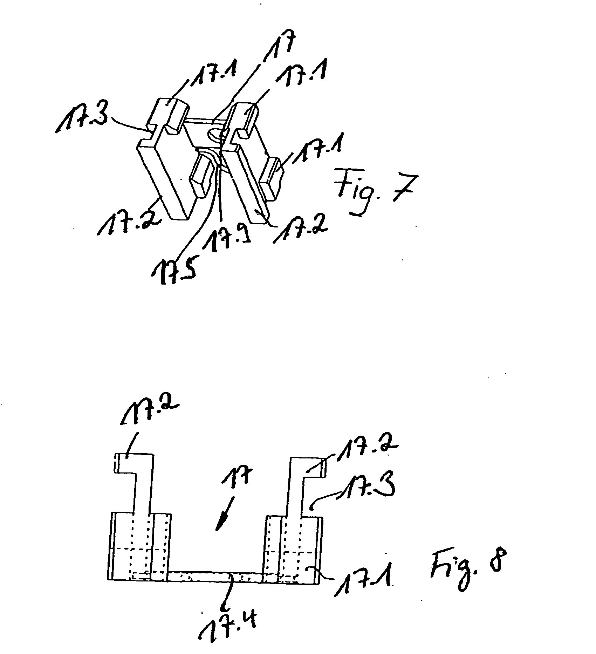

- Fig. 7: in einer perspektivischen Darstellung ein Ausführungsbeispiel eines als Schiebeelement ausgebildeten Schlüssels für das Schlüsselelement,
- Fig. 8: eine Querschnittsdarstellung des Schlüssels nach Fig. 7,

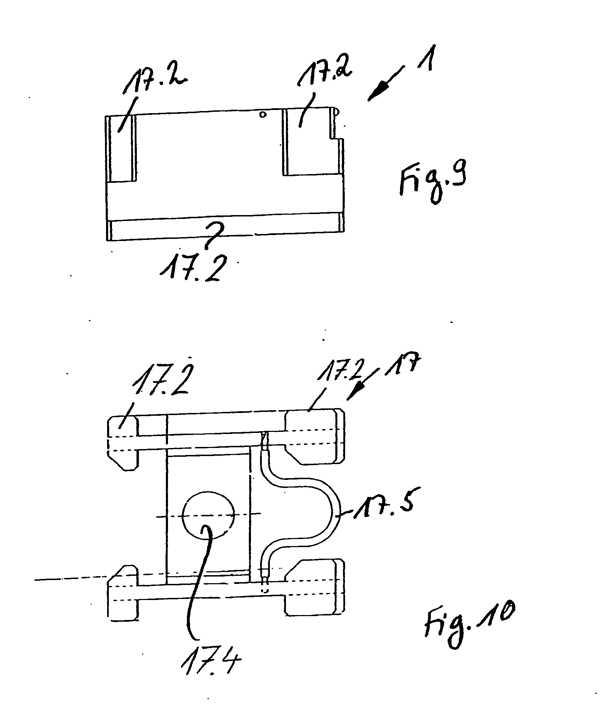

- Fig. 9: eine Seitenansicht des Schlüssels nach Fig. 7 und 8, und
- Fig. 10: eine Draufsicht auf den Schlüssel nach Fig. 7 bis 9,
- Fig. 11: in verschiedenen perspektivischen Ansichten auszugsweise ein Ausführungsbeispiel einer Spannstange,
- Fig. 12: ausschnittsweise eine Draufsicht auf einen hinteren Türflügel mit einem oberen klappbaren Portalbalken,
- Fig. 13: eine Seitenansicht auf das Ausführungsbeispiel nach Fig. 12,
- Fig. 13a: eine Vergrößerung des Details nach Fig. 13,

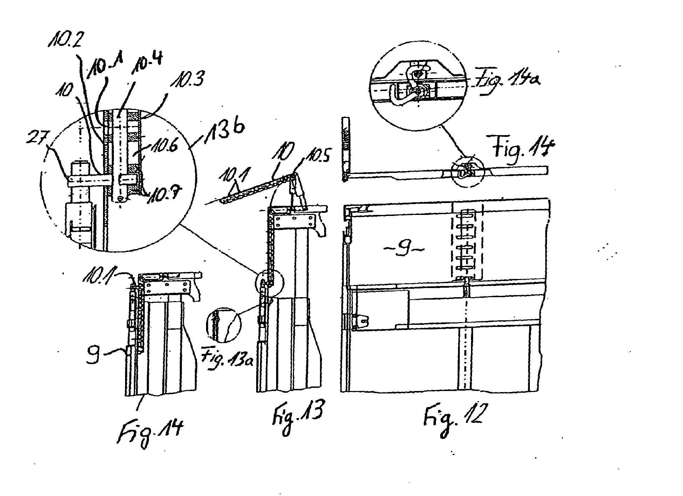

- Fig. 13 b: eine Vergrößerung des Details nach Fig. 13,
- Fig. 14: eine analoge Darstellung zu Fig. 13 bei abgesenktem Portalbalken, der sich in der abgesenkten Position hinter dem Türflügel erstrecken
- Fig. 14a: eine Vergrößerung des Details nach Fig. 14;

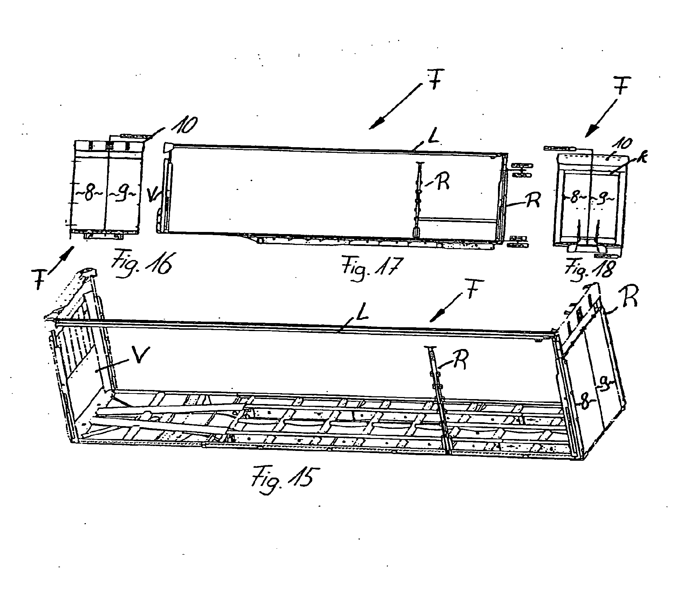

- Fig. 15: in einer schematisch-perspektivischen Darstellung ein Ausführungsbeispiel eines Fahrzeugaufbaus;
- Fig. 16: eine Ansicht von hinten auf den Fahrzeugaufbau nach Fig. 15;
- Fig. 17: eine Seitenansicht des Fahrzeugaufbaus nach Fig. 15, und
- Fig. 18: eine Vorderansicht des Fahrzeugaufbaus nach Fig. 15.

In der Zeichnung sind grundsätzlich gleichwirkende Teile mit übereinstimmenden Bezugsziffern versehen.

In der Zeichnung ist in den Fig. 15 bis 18 allgemein ein Fahrzeugaufbau F veranschaulicht, der wie herkömmlich ein Fahrgestell haben soll, das über Räder auf dem Erdboden abstützbar ist. Dieser hat eine Rückwand R, die in den meisten Anwendungsfällen eine an den hinteren Eckrungen 11 verschwenkbar abgestützte Türflügel 8, 9 hat. Zusätzlich ist eine Stirnwand S im vorderen Bereich des Fahrzeugaufbaus F vorgesehen. Rückwand R und Stirnwand S sind über obere Längsträger L verbunden, die genauso wie vordere und hintere Querträger 10 an den vorderen beiden Eckrungen 11 wie auch an den hinteren beiden Eckrungen 11 abgestützt sind. Zusätzlich können noch weitere Rungen R vorgesehen sein, z.B. ein oder mehrere mit Abstand voneinander zwischen den vorderen und hinteren Eckrungen angeordnete Seitenrungen.

Oberhalb der Längs- und Querträger L, 10 ist ein nicht dargestelltes Dach vorgesehen, das in dem vorliegenden Ausführungsbeispiel als Hubdach ausgebildet ist. An den Seitenwandbereichen ist in den meisten Anwendungsfällen eine nicht dargestellte Seitenwandplane vorzusehen, die gleitverschieblich gehaltert ist, um das Fahrzeuginnere auch von der Seite her beladen zu können. Ebenfalls ist es möglich, das Hubdach mit einem Schiebedach zu versehen. Im Rahmen der vorliegenden Erfindung geht es darum, das Hubdach in unterschiedlichen Höhenpositionen feststellen zu können, um ein Fahrzeugaufbau F zu schaffen, der bedienfreundlich und auf einfache und sichere Weise auf unterschiedliche Aufbauhöhen einzustellen ist.

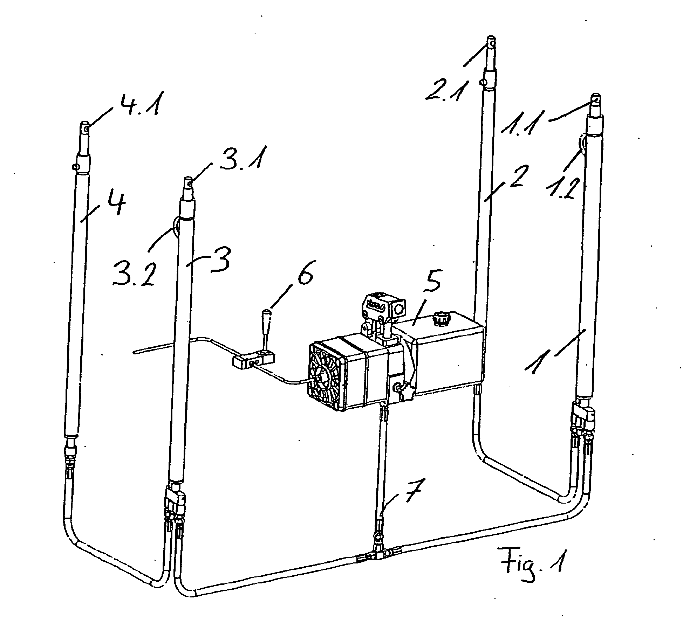

Dazu sind in dem in Fig. 1 gezeigten Ausführungsbeispiel insgesamt vier als Hydraulikzylinder ausgebildete Kraftheber 1, 2, 3 und 4 vorgesehen, die entsprechende Hubstangen 1.1, 2.1, 3.1 und 4.1 aufweisen. Diese werden von einer Pumpe 5 mit einem Hydraulikmedium versehen, wobei nach Aktivierung zunächst über eine Hydraulikleitung 7 die beiden Zylinder 1 und 3 mit dem Hydraulikmedium versehen werden und dann über eine jeweilige Leitung 1.2 und 3.2 die Zylinder 2 und 4 mit dem Hydraulikmedium beaufschlagt werden, so dass die Zylinder 1 und 2 synchron und zum anderen die Zylinder 3 und 4 synchron geschaltet sind. Über einen Hebel 6 sind die Leitungen drucklos zu schalten, so dass dann die Schubstangen 1.1, 2.1, 3.1 und 4.1 selbsttätig ihre eingefahrene Ausgangsposition wieder einnehmen können.

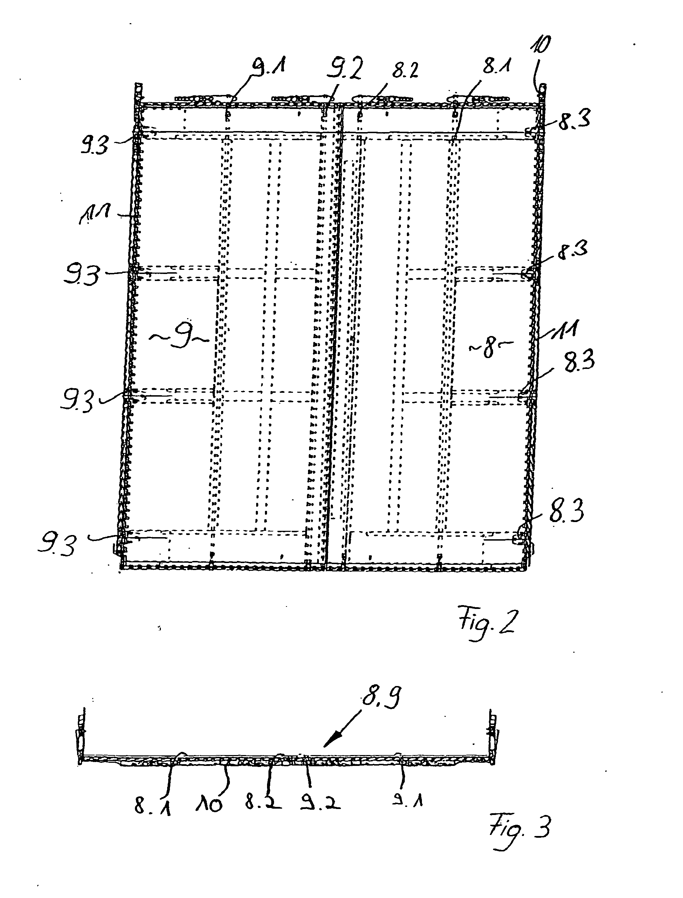

In den Fig. 2 und 3 ist die Rückwand eines Fahrzeugaufbaus nach einem Ausführungsbeispiel gezeigt, die zwei aufschwenkbare Türflügel 8 und 9 aufweist mit entsprechenden Verriegelungsstangen 8.1 und 8.2 bzw. 9.1 und 9.2. Diese Verriegelungsstangen greifen ein in jeweilige Haltestangen eines Portalbalkens 10, der noch näher anhand der Fig. 12, 13 und 14 erläutert werden wird. Die Heckflügeltüren 8 und 9 sind über Scharniere 8.3 bzw. 9.3 an Eckrungen 11 des Fahrzeugaufbaus schwenkbeweglich gehaltert.

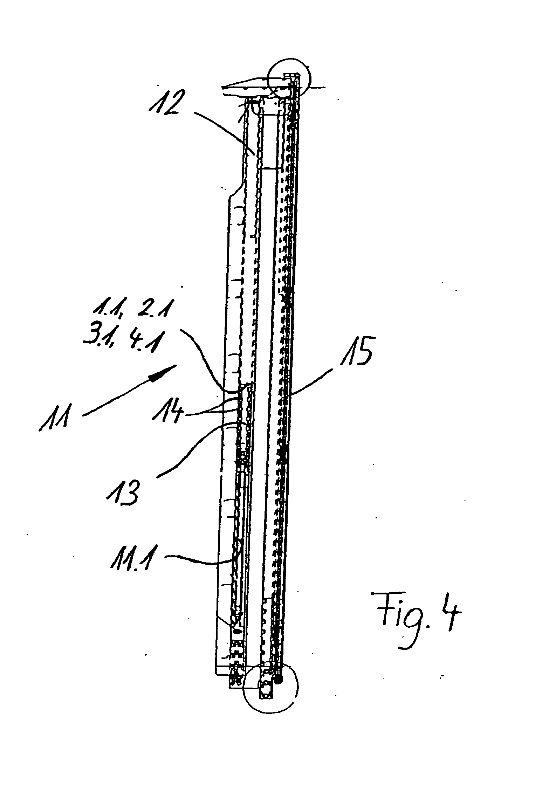

Diese Eckrungen 11 sind höhen- bzw. längenveränderlich ausgebildet, und zwar nach entsprechender Aktivierung der Kraftheber 1, 2, 3 und 4 und Herausfahren der Schubstangen 1.1, 2.1, 3.1 und 4.1. Dazu weist die aus Fig. 4 ersichtliche Eckrunge ein Schubstück 12 auf und ein Schlüsselelement 13, an dem das Schubstück 12 höhenbeweglich entlanggleiten kann.

Wie aus Fig. 4 ersichtlich, hat das Schlüsselelement 13 eine Anzahl von Schlüssellöchern 14, die in der Darstellung nach Fig. 4 teilweise aufgrund der dort eingenommenen Höhenlage verdeckt sind. Das Schubstück 13 ist in der Eckrunge 11 versenkt angeordnet, wozu die Eckrunge 11 eine nuten- bzw. schlitzförmige Öffnung 11.1 hat. Das ansonsten im oberen Bereich der Eckrunge 11 ersichtliche Schubstück 12 ist weitestgehend abgedeckt.

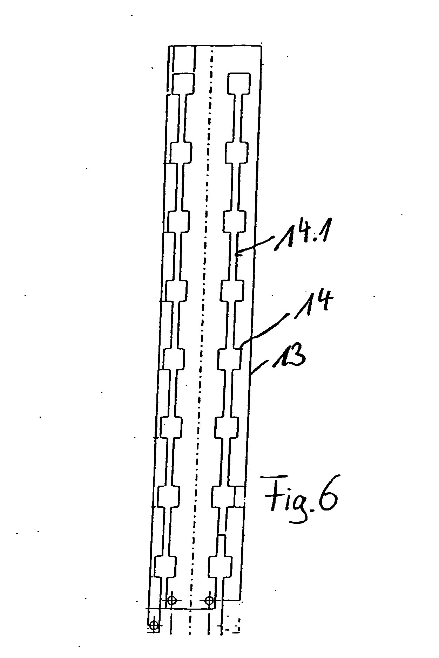

Dem Schubstück 12 ist ein Schlüssel 17 zugeordnet. Dieser hat seitliche abgewinkelte Anformungen 17.2, so dass sich zwischen den Anformungen 17.1 und den Abwinkelungen 17.2 eine nutenförmige Aufnahme 17.3 ergibt. Wie aus Fig. 6 ersichtlich, sind die Schlitze 14.1 des Schlüsselelementes 13 nach unten hin offen, so dass von unten der als Schiebeelement ausgebildeter Schlüssel 17 eingeführt werden kann, wonach er mit seinen Aufnahmen 17.3 die den Schlitzen 14.1 benachbarten Bereiche des Schlüsselelementes 13 aufnimmt. Hat er ein entsprechendes Höhenmaß erreicht, was einer bestimmten Aufbauhöhe entspricht, kann er in die Schlüssellöcher 14 mit seinen Anformungen eingedrückt werden, so dass der Schlüssel 12 in dieser Position arretiert ist. Gelangt das Schubstück 12 infolge seiner Schwerkraft nach Drucklosstellung der Kraftheber in eine abgesenkte Position, kann es sich an dem arretierten Schlüssel 17 als Widerlager abstützen, so dass dies der eingestellten Höhenposition der Eckrunge 11 entspricht. Dies ist auch die eingestellte Höhe des Nutzfahrzeugaufbaus und damit des Hubdaches und des Portalbalkens 10, was noch näher erläutert werden wird. In der arretierten Position kann der Schlüssel 17 zusätzlich noch gesichert werden, z.B. über eine Schraubverbindung, die in das Loch 17.4 eingreift. Um den Schlüssel wieder aus der Arretierung herauszuziehen, ist im dargestellten Ausführungsbeispiel eine Schlaufe 17.5 vorgesehen.

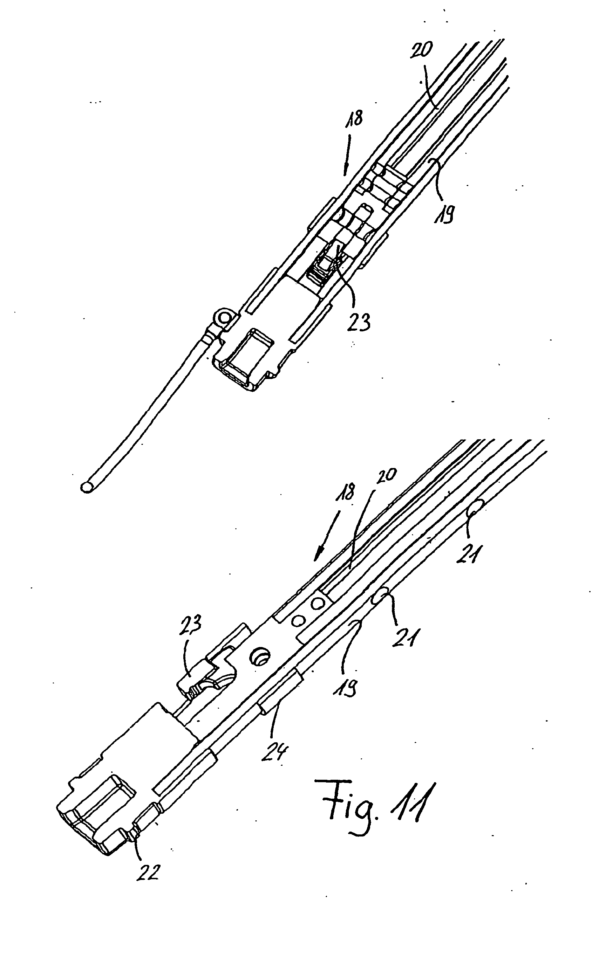

In Fig. 11 ist näher ein Ausführungsbeispiel einer erfindungsgemäßen, allgemein mit 18 bezeichneten Spannstange dargestellt. Diese hat ein Spannstangenrohr 19 und eine innerhalb des Spannstangenrohrs 19 gelegene Spannrolle 20. Die Spannstange 18 hat Bohrungen 21, in die Verriegelungselemente des Spannstangenrohres 19 einzubringen sind. Die Spannrolle 20 ist relativ zu dem Spannstangenrohr 19 zu bewegen. Die Spannstange 18 hat in ihrem unteren Bereich ein Kopfstück 22, das als Vierkant ausgebildet ist, und das in eine entsprechende Vierkantaufnahme des Fahrzeugaufbaus im montierten Zustand der Teile eingeführt ist. Dabei umgreift im übrigen die Seitenwandung eine Eckrunge 11. An der Spannrolle 20 ist ein Hebel 23 vorgesehen, der mit den nicht sichtbaren Verriegelungselement wirkt. Dieser ist einzudrücken und auch herauszubewegen und wird durch einen Sicherungsring 24 gesichert. Nachdem die Spannstange 18 in die Vierkantaufnahme des Fahrzeugaufbaus über das Kopfstück 22 eingesetzt ist, kann die Seitenwandung über die Spannrolle 20 gespannt werden. Das Spannstangenrohr 19 hat dazu eine schlitzförmige Aufnahme, so dass ein entsprechender Keder in die Spannrolle 20 eingeführt werden kann, so dass sämtliche Teile geschützt anzuordnen sind.

Aus den Fig. 12 bis 14 ist näher der Bereich der Rückwand 9 mit dem erfindungsgemäßen Portalbalken 10 ersichtlich, der wie aus Fig. 13 ersichtlich als abgewinkelter Profilkörper ausgebildet ist, der um eine horizontale Achse 10 zu verschwenken ist. Dieser Portalbalken 10 hat verschiedene übereinander angeordnete Verriegelungsaufnahmen 10.1, die von einem Riegelfinger 27 von Türsicherungselementen 8.1, 8.2,9.1, 9.2. zu durchdringen sind. Der Portalbalken 10 selber ist als Kasten ausgebildet mit einer Vorderwandung 10.2 und einer Rückwandung 10.3 und einer inneren Haltestange 10.4, die von dem Riegelfinger 27 umgriffen werden kann. Dadurch, dass dieser schwenkbar ausgebildet ist, kann auch bei erhöhtem Nutzfahrzeugaubau, wie er aus Fig. 13 zu ersehen ist, nach entsprechendem Hochverschwenken des Profilbalkens 10 die ganze Nutzfahrzeughöhe zur Beladung freigegeben werden. Bei abgesenktem Hubdach erstreckt sich der Portalbalken 10 im wesentlichen hinter der Tür 9, wobei dann die obere Aufnahme 10.1 des Portalbalkens 10 von dem Verriegelungsfinger 27 genutzt wird. Im Kasteninneren 10.6 sind Lagerböcke 10.7 vorgesehen, die sich von der Vorderwand 10.2 bis zur Rückwand 10.3 erstrecken und den gesamten Aufbau aussteifen und zudem als Zentrierung für die Verriegelungsfinger 27 dienen.

## Patentansprüche

1. Fahrzeugaufbau für Nutzfahrzeuge mit einer Stirnwand und einer vorzugsweise Flügeltüren (8, 9) umfassenden Rückwand sowie mit einer sich zwischen der Stirnwand und der Rückwand erstreckenden Seitenwandplanen, die an ihrer vorderen und/oder hinteren Seitenwandkante an einer eine Spannrolle (20) umfassenden Spannstange (18) festgelegt sind, und an einem an Längsträgern und Querträgern festlegbaren Hubdach, welche auf höhenverstellbaren vorderen und hinteren Eckrungen (10) abgestützt sind, die über Kraftheber (1, 2, 3, 4) und unterschiedliche Höhenpositionen überführbar sind, **dadurch gekennzeichnet, dass** eine Spannstange (18) eine in einem Spannstangenrohr (19) geführte Spannrolle (20) und einen Riegel aufweist und die Spannrolle (20) mit dem Spannstangenrohr (19) in unterschiedlichen Längenpositionen durch den Riegel arretierbar ist, wobei das Spannstangenrohr (19) einen Schlitz aufweist, durch den das Betätigungselement des Riegels zugänglich ist und durch den die Seitenwandplane zu der Spannrolle (20) geführt ist.

2. Fahrzeugaufbau nach Anspruch 1, **dadurch gekennzeichnet, dass** das Spannstangenrohr (19) Bohrungen (21) aufweist, in die ein bewegliches Verriegelungselement der Spannrolle (20) als Riegel einführbar ist.

3. Fahrzeugaufbau nach Anspruch 2, **dadurch gekennzeichnet, dass** das Verriegelungselement über einen auf- und abbeweglichen Sicherungsring (24) in der Bohrung (21) arretierbar ist.

4. Fahrzeugaufbau nach einem der Ansprüche 1 bis 3, **dadurch gekennzeichnet, dass** der Riegel mittels eines klappbaren Hebels (23) in die Bohrung (21) einführbar und aus diesem wieder herausbringbar ist und der klappbare Hebel (23) über den Schlitz in dem Spannstangenrohr zugänglich ist.

5. Fahrzeugaufbau nach einem der Ansprüche 1 bis 4, **dadurch gekennzeichnet, dass** die Spannrolle (20) eine Schlitzführung zur Aufnahme eines Keders der Seitenwandplane aufweist.

6. Fahrzeugaufbau nach einem der Ansprüche 1 bis 5, **dadurch gekennzeichnet, dass** die Spannstange (18) einenends einen als Vierkant ausgebildetes Kopfstück (22) hat, das in eine entsprechende Vierkantaufnahme des Fahrzeugaufbaus einführbar ist.

7. Fahrzeugaufbau nach einem der Ansprüche 1 bis 6, **dadurch gekennzeichnet, dass** an der Spannstange (18) ein Schlaufenelement angreift, um die Spannstange (18) aus der Vierkantaufnahme des Fahrzeugaufbaus herauszuheben.

## Claims

1. Vehicle body for commercial vehicles, having a front end-wall and a rear wall which preferably comprises leaf doors (8, 9) and having side-wall curtains extending between the front end-wall and the rear wall which, at their front and/or rear edges, are fixed to a tensioning bar (18) comprising a tensioning roller (20) and to a lifting roof which can be secured to longitudinal beams and transverse beams which are supported on front and rear corner posts (10), which front and rear corner posts (10) are adjustable in the heightwise direction and can be transferred to different heightwise positions by means of powered lifters (1, 2, 3, 4), **characterised in that** a tensioning bar (18) has a tensioning roller (20) mounted in a tensioning bar tube (19) and a locking pin and the tensioning roller (20) together with the tensioning bar tube (19) can be locked in positions corresponding to different lengths by the locking pin, the tensioning bar tube (19) having a slot through which the member for actuating the locking pin is accessible and through which the side-wall curtain passes to the tensioning roller (20).

2. Vehicle body according to claim 1, **characterised in that** the tensioning bar tube (19) has holes (21) into which a movable member for locking the tensioning roller (20) can be inserted as a locking pin.

3. Vehicle body according to claim 2, **characterised in that** the locking member can be locked in the hole (21) by means of a securing ring (24) which can be moved up and down.

4. Vehicle body according to one of claims 1 to 3, **characterised in that** the locking pin can be inserted in the hole (21) and can be withdrawn again therefrom by means of a pivotable lever (23) and the pivotable lever (23) is accessible through the slot in the tensioning bar tube.

5. Vehicle body according to one of claims 1 to 4, **characterised in that** the tensioning roller (20) has a guiding slot to receive an edge reinforcement of the side-wall curtain.

6. Vehicle body according to one of claims 1 to 5, **characterised in that** the tensioning bar (18) has at one end an end-piece (22) in the form of a square which can be inserted in a corresponding square receptacle belonging to the vehicle body.

7. Vehicle body according to one of claims 1 to 6, **characterised in that** a loop member engages with the tensioning bar (18) to allow the tensioning bar (18) to be lifted out of the square receptacle belonging to the vehicle body.

## Revendications

1. Plateforme pour véhicules utilitaires avec une paroi avant et une paroi arrière comportant de préférence des portes papillon (8, 9) ainsi qu'avec des bâches de paroi latérale s'étendant entre la paroi avant et la paroi arrière qui sont fixées au niveau de leur arête de paroi latérale avant et/ou arrière sur un tendeur (18) comportant un rouleau de tension (20), et sur un toit relevable pouvant être fixé sur des longerons et des traverses qui sont en appui sur des ranchers (10) avant et arrière réglables en hauteur qui peuvent être transférés par des vérins hydrauliques (1, 2, 3, 4) dans différentes positions verticales, **caractérisée en ce qu'**un tendeur (18) présente un rouleau de tension (20) guidé dans un tube de tendeur (19) et un verrou et **en ce que** le rouleau de tension (20) peut être bloqué avec le tube de tendeur (19) dans différentes positions longitudinales par le verrou, le tube de tendeur (19) présentant une fente, par laquelle l'élément d'actionnement du verrou est accessible et par laquelle la bâche de paroi latérale est guidée vers le rouleau de tension (20).

2. Plateforme pour véhicules utilitaires selon la revendication 1, **caractérisée en ce que** le tube de tendeur (19) présente des perçages (21), dans lesquels un élément de verrouillage mobile du rouleau de tension (20) peut être introduit en guise de verrou.

3. Plateforme pour véhicules utilitaires selon la revendication 2, **caractérisée en ce que** l'élément de verrouillage peut être bloqué par un circlip (24) mobile vers le haut et le bas dans le perçage (21).

4. Plateforme pour véhicules utilitaires selon l'une quelconque des revendications 1 à 3, **caractérisée en ce que** le verrou peut être introduit à l'aide d'un levier rabattable (23) dans le perçage (21) et peut être sorti de nouveau de celui-ci et **en ce que** le levier rabattable (23) est accessible par la fente dans le tube de tendeur.

5. Plateforme pour véhicules utilitaires selon l'une quelconque des revendications 1 à 4, **caractérisée en ce que** le rouleau de tension (20) présente une fente de guidage pour le logement d'un bourrelet de la bâche de paroi latérale.

6. Plateforme pour véhicules utilitaires selon l'une quelconque des revendications 1 à 5, **caractérisée en ce que** le tendeur (18) présente au niveau d'une extrémité une tête (22) réalisée comme un carré qui peut être introduite dans un logement carré correspondant de la plateforme pour véhicules utilitaires.

7. Plateforme pour véhicules utilitaires selon l'une quelconque des revendications 1 à 6, **caractérisée en ce qu'**un élément à boucle agit sur le tendeur (18) afin de lever le tendeur (18) du logement carré de la plateforme pour véhicules utilitaires.
